# EUROPÄISCHE PATENTSCHRIFT

(11) **EP 3 602 768 B1**
(45) Veröffentlichungstag und Bekanntmachung des Hinweises auf die Patenterteilung: **28.06.2023**
(21) Anmeldenummer: 18713633.8
(22) Anmeldetag: 23.03.2018
(51) Int. Cl.: H02M 3/335, H02J 3/38, H02J 1/10, H02J 3/46

(54) **WINDPARK MIT MEHREREN WINDENERGIEANLAGEN**
WIND PARK WITH MULTIPLE WIND TURBINES
PARC ÉOLIEN COMPRENANT PLUSIEURS AÉROGÉNÉRATEURS

(30) Priorität: 24.03.2017 DE 102017106436
(43) Veröffentlichungstag der Anmeldung: 05.02.2020
(73) Patentinhaber: Wobben Properties GmbH, 26607 Aurich (DE)
(72) Erfinder: BROMBACH, Johannes, 13437 Berlin (DE); STRAFIEL, Christian, 26607 Aurich (DE)
(74) Vertreter: Eisenführ Speiser
(86) Internationale Anmeldenummer: PCT/EP2018/057403
(87) Internationale Veröffentlichungsnummer: WO 2018/172506

(56) Entgegenhaltungen:
- EP-A1- 3 109 992
- WO-A1-2016/009047
- DE-A1-102012 106 517
- US-A1- 2007 246 943
- US-A1- 2013 197 704

## Beschreibung

Die vorliegende Erfindung betrifft einen Windpark mit mehreren Windenergieanlagen zum Einspeisen elektrischer Leistung in ein elektrisches Versorgungsnetz an einem Netzanschlusspunkt. Weiterhin betrifft die vorliegende Erfindung einen Windpark mit einem gleichspannungsbasierten Windparknetz. Ferner betrifft die Erfindung auch eine Windenergieanlage, die dazu eingerichtet ist, in einem solchen gleichspannungsbasierten Windparknetz eingesetzt zu werden.

Es ist allgemein bekannt, dass konventionelle Windparknetze, die auch vereinfachend als Parknetze bezeichnet werden können, als Wechselspannungsnetze mit drei Phasen ausgeführt werden. Solche Windparks sind häufig so aufgebaut, dass ein elektrischer Wechselstrom in einer Windenergieanlage erzeugt und mittels eines elektrischen Umrichters in das Wechselspannungsparknetz übertragen wird. Es gibt auch die Variante, dass eine doppelt gespeiste Asynchronmaschine verwendet wird, die allerdings auch einen Umrichter verwendet.

In dem elektrischen Umrichter werden aktive Leistungsschalter wie zum Beispiel Leistungshalbleiter verwendet, die eine Parknetzspannung mit einer bestimmten Frequenz und einer bestimmten Amplitude erzeugen. Die Parknetzspannung wird daraufhin zumeist über einen Transformator auf eine höhere Spannungsebene des Versorgungsnetzes transformiert und ermöglicht somit ein Einspeisen der Leistung aus dem Parknetz in das Versorgungsnetz.

Grundsätzlich ist es wünschenswert, eine Windenergieanlage in einem Parknetz möglichst lange und zuverlässig betreiben zu können. Dafür ist ein häufiger Ansatz, möglichst viele Komponenten des Parknetzes als passive Bauelemente auszuführen. Da passive Bauelemente in der Praxis in den meisten Fällen eine größere Ausfallsicherheit gegenüber aktiven Bauelementen aufweisen, erhöht sich bei einer vermehrten Verwendung von passiven Bauelementen in einem Windpark auch folglich die Ausfallsicherheit des Windparks bzw. des Parknetzes.

Ferner muss gewährleistet sein, dass die Windenergieanlagen innerhalb des Windparks bei einem auftretenden Fehler im Parknetz, wie beispielsweise einem Kurzschluss oder einem Überstrom, durch geeignete Schutzmaßnahmen vor einer eventuell auftretenden Beschädigung oder Zerstörung geschützt werden kann. Dabei ist es wünschenswert, wenigstens eine gleiche Gesamtzuverlässigkeit des Parknetzes im Vergleich zu wechselspannungsbasierten Parknetzen erreichen zu können.

DC-Parknetze für Gezeitenkraftwerke und Windenergieanlagen sind bereits in der Offenlegungsschrift US 2011/0198847 A1 (Rolls Royce) beschrieben worden. Mittels eines sogenannten Sperrwandlers (engl. fly-back converter oder buck-boost converter) wird eine DC-Spannung über einen Transformator in ein DC-Parknetz transformiert. Das beschriebene Gleichspannungswandlungsprinzip eignet sich jedoch nicht, um eine sinnvolle Gleichspannungsübertragung durchführen zu können, da das gezeigte Sperrwandlerprinzip für eine hohe Leistungsübertragung ungeeignet ist.

Das Deutsche Patent- und Markenamt hat in der Prioritätsanmeldung zu vorliegender Anmeldung folgenden weiteren Stand der Technik recherchiert: DE 198 45 903 A1, US 2013/0197704 A1, DE 10 2004 001 478 A1, DE 10 2009 028 973 A1, DE 10 2012 002 292 A1, DE 197 11 017 A1.

Dokument DE 10 2012 106 517 A1 offenbart eine mehrere elektrisch gekoppelte Windkraftanlagen umfassende Vorrichtung mit einer Einrichtung zur Erzeugung einer Gleichspannung im Bereich zwischen einigen hundert Volt bis zu einigen tausend Volt durch eine Kopplung einer Vielzahl von Windkraftanlagen in einer Reihenschaltung. Die Einrichtung weist zur galvanischen Trennung zum elektrischen System der gekoppelten Windkraftanlagen einen Transformator auf, sodass die aktiven Bauteile jeder einzelnen Windkraftanlage nur mit geringen Spannungspegeln betrieben werden müssen.

Aufgabe der vorliegenden Erfindung ist es somit, zumindest eines der oben genannten Probleme zu adressieren. Insbesondere soll eine Lösung vorgeschlagen werden, die auf eine einfache Art zu einer erhöhten Sicherheit beim Betreiben einer Windenergieanlage in einem Windparknetz führt, insbesondere um einem potentiellen Fehler in einem Parknetz zu begegnen und somit die Gesamtzuverlässigkeit des Parknetzes zu erhöhen. Zumindest soll gegenüber bisher bekannten Lösungen eine alternative Lösung vorgeschlagen werden.

Erfindungsgemäß wird somit ein Windpark zum Einspeisen elektrischer Leistung in ein elektrisches Versorgungsnetz an einem Netzanschlusspunkt gemäß Anspruch 1 vorgeschlagen. Demnach wird die im Windpark erzeugte elektrische Leistung in das elektrische Versorgungsnetz über ein DC-Parknetz eingespeist.

Der Windpark weist somit ein DC-Parknetz zum Übertragen elektrischer Leistung von den Windenergieanlagen zu dem Netzanschlusspunkt auf. Die Übertragung der elektrischen Leistung im Park erfolgt somit als Gleichspannung bzw. Gleichstrom.

Um die Leistung von dem DC-Parknetz in ein elektrisches Versorgungsnetz einzuspeisen, das als Wechselstromnetz betrieben wird, ist ein Umrichter vorgesehen, der auch als Wechselrichter oder Zentralwechselrichter bezeichnet bzw, ausgeführt werden kann. Dieser Umrichter ist dazu am Netzanschlusspunkt angeschlossen, über den damit der Windpark in das elektrische Versorgungsnetz einspeist. Damit ist er zwischen dem Parknetz und dem Netzanschlusspunkt angeordnet.

Um die elektrische Leistung von der Windenergieanlage in das DC-Parknetz zu übertragen, ist ein DC-DC-Wandler vorgesehen. Besonders ist für jede Windenergieanlage wenigstens ein DC-DC-Wandler vorgesehen. Damit wird besonders eine Gleichspannung der Windenergieanlage in das DC-Parknetz übertragen. Der DC-DC-Wandler transformiert somit die Leistung mit einer ersten Gleichspannung an der Windenergieanlage in einer zweite Gleichspannung im DC-Parknetz. Die zweite DC-Spannung, nämlich die im DC-Parknetz, ist dabei vorzugsweise höher als die erste DC-Spannung, also die an der Windenergieanlage.

Der DC-DC-Wandler weist dazu eine Schalteinrichtung und einen Transformator auf. Die Schalteinrichtung weist besonders mehrere Schalter auf. Diese Schalter werden so geschaltet, dass sich an der Primärseite des Transformators eine Spannung mit wechselnder Polarität einstellt. Dazu wird bspw. so geschaltet, dass eine positive Spannung der Gleichspannung der Windenergieanlage abwechselnd an einen ersten und einen zweiten Anschluss der Primärseite angelegt wird und die negative Spannung der Gleichspannung der Windenergieanlage wird dazu entgegengesetzt an den zweiten und ersten Anschluss der Primärseite des Transformators angelegt. Entsprechend fließt dann auch ein Strom mit ständig wechselnder Richtung durch die Primärseite und erzeugt entsprechend einen Strom an der Sekundärseite.

Dadurch wird die Leistung von der Primärseite zur Sekundärseite übertragen. Ein Gleichrichtmittel an der Sekundärseite, besonders entsprechend verschaltete Dioden, führt zu einer Gleichrichtung und damit zu einem Gleichstrom und damit zu einer Gleichspannung im DC-Parknetz.

Hierdurch wird vorteilhafter Weise eine galvanische Trennung zwischen der Windenergieanlage und dem Parknetz erreicht. Es konnte auch erreicht werden, dass sich die aktiven Bauelemente des Schaltmittels nur anlagenseitig an der Primärseite des Transformators, also zur Windenergieanlage hin befinden. Die erfindungsgemäße Lösung ist dabei besonders effizient, weil sie gleichzeitig durch positive und negative Ströme im Transformator eine hohe Energieübertragung erreicht.

Besonders effizient ist auch, die wechselnde Polarität mit nahezu rechteckförmigen Spannungswechsel durchzuführen. Dazu wird besonders ein Hochfrequenztransformator vorgeschlagen. Es wurde erkannt, dass die Verwendung eines vergleichsweise hochwertigen Transformators dennoch im Ergebnis zu einer kostengünstigen Gesamtlösung führt, denn es können hier positive und negative Impulse übertragen werden, was die Verwendung eines hochwertigen Hochfrequenztransformators mehr als ausgleicht.

Es wird somit mit einem Transformator eine galvanische Trennung zwischen der Windenergieanlage und dem Parknetz erreicht. Ferner werden im gleichspannungsbasierten Parknetz ausschließlich passive Bauelemente verwendet. Aktive Bauelemente werden erfindungsgemäß nur AC-seitig, d.h. anlagenseitig im Niederspannungskreis der Windenergieanlage sowie netzseitig hinter dem Zentralwechselrichter verwendet und sind daher durch die galvanische Trennung gegen hohe Spannungen im DC-Parknetz geschützt. Dadurch kann auch die Ausfallsicherheit des Parknetzes erhöht und vergleichsweise kostengünstige Halbleiterschalter anlagenseitig verwenden werden, die für einen kleinen Spannungsbereich ausgelegt sind.

Es wird hier in vorteilhafter Weise das Grundprinzip einer DC-DC-Wandlung ausgenutzt, das auf dem Prinzip einer Durchflusswandlung oder einer Resonanzwandlung basiert.

Eine Resonanzwandlung basiert dabei auf dem Prinzip, zusätzliche Kapazitäten und Induktivitäten derartig zu verschalten, dass die leistungsübertragende Strecke inklusive des Transformators einen Schwingkreis ausbildet und somit im Bereich ihres sogenannten Resonanzpunktes betrieben wird. Eine beispielhafte Grundschaltung um eine Resonanzwandlung auszuführen wäre zum Beispiel, eine zusätzliche Induktivität und Kapazität in Serie zur Primärwicklung des Transformators einzubringen.

Eine DC-DC-Wandlung mittels eines Resonanzwandlers auszuführen, bietet den Vorteil, dass Verlustleistungen bei Schaltvorgängen minimiert werden können. Dabei ermöglicht eine Resonanzwandlung die Möglichkeit, in einem Nulldurchgang der Spannung oder des Stromes zu schalten. Dieses Prinzip kann auch ganz generell als weiches Schalten bezeichnet werden.

Ferner kann durch den erfindungsgemäßen Aufbau des Windparks ein sehr kompakter und kostengünstiger Aufbau umgesetzt werden sowie eine einstufige in einem großen Bereich frei einstellbare Spannungsanhebung von der Windenergieanlage zum Parknetz. Die Parknetzspannung ist somit über ein Übertragungsverhältnis ü des Transformators gut einstellbar.

Zudem weist ein DC-Parknetz lediglich zwei Hauptanschlussleitungen zum Übertragen der Leistung auf, nämlich eine für die positive Spannung und eine die für negative Spannung. Durch die DC-Parknetzarchitektur kann somit wenigstens eine Anschlussleitung im Vergleich zu einer üblichen Wechselspannungsarchitektur eingespart werden. Damit kann bei einem Aufbau eines neuen Windparks der Verkabelungsaufwand des Windparks reduziert werden.

Ferner ist es beim Betreiben eines DC-Parknetzes wichtig einen selektiven Netzschutz mit DC-Kurzschlussunterbrechungen vorzunehmen. Bei einem im DC-Parknetz auftretenden Fehler muss eine Freischaltung der Windenergieanlage mittels schneller Trennschalter in einer kurzfristigen Netzabschaltung ermöglicht werden. Dabei bedeutet selektiver Netzschutz, dass auf unterschiedliche Fehler, die an unterschiedlichen Orten im Parknetz oder auch in, bzw. direkt an der Anlage auftreten können, mittels einer Fehlerabschaltung oder einer anderen Schutzmaßnahme unabhängig reagiert werden kann. Der selektive Netzschutz wird dabei mehrstufig ausgeführt, sodass beispielsweise auf Fehler in Windenergieanlagen anders reagiert wird, als bei einem Fehler, der im Parknetz auftritt Fehler, die aus dem Versorgungsnetz in das Parknetz einkoppeln können, sind ebenfalls zu berücksichtigen. Besonders fallen auch örtlich begrenzte Abschaltungen bei örtlich auftretenden Fehlern unter einen selektiven Netzschutz.

Erfindungsgemäß wurde erkannt, dass es bei gleichspannungsbasierten Parknetzen vorteilhaft ist, dass ein spezieller DC-DC-Wandler zum Einsatz kommt, der eine geeignete Leistungsübertragung gewährleisten sowie einen aktiven Anlagenschutz ermöglichen kann. Durch die Verwendung eines DC-DC Wandlerprinzips, das beispielsweise auf einer Durchfluss- oder Resonanzwandlung basiert, kann nicht nur eine höhere Leistungsübertragung gewährleistet werden, sondern es ist auch möglich, eine vollständige Trennung des Transformators von der Windenergieanlage vorzunehmen. Werden alle Schaltmittel anlagenseitig auf der Primärseite des Transformators geöffnet, ist die Windenergieanlage galvanisch, oder zumindest elektrisch vom Parknetz entkoppelt.

Ferner ist es beim Betreiben eines Windparksparks notwendig, eine geeignete Netzarchitektur zu verwenden. Eine geeignete Netzarchitektur zeichnet sich dadurch aus, dass bei einem auftretenden Fehler im Windpark nicht das gesamte Parknetz abgeschaltet werden muss, sondern, dass es in Teilbereichen weiterbetrieben werden kann. Beispielsweise kann das Parknetz als Ringnetz oder Maschennetz oder eine Kombination daraus aufgebaut werden. Tritt ein Fehler in einem Teilbereich des Parknetzes auf, werden sogenannte Trennschalter verwendet die während einer kurzen Unterbrechung der Netzspannung den Fehler freischalten, um den Teilbereich in dem ein Fehler auftritt, von dem restlichen, fehlerlosen, Parknetz zu trennen. Der Teilbereich, in dem kein Fehler auftritt, kann daraufhin weiter betrieben werden und die elektrische Leistung, die in diesem Teilbereich erzeugt wird, kann in das elektrische Versorgungsnetz eingespeist werden.

Erfindungsgemäß, zumindest gemäß einer Ausführungsform, wird somit ein wesentlich höherer Wirkungsgrad bei der Leistungsübertragung durch die Verwendung einer geeigneten Schalteinrichtung mit Transformator erreicht sowie ein grundlegend neues Netzschutz-Konzept für das DC-Parknetz vorgeschlagen.

Vorzugsweise stellt die Windenergieanlage der Schalteinrichtung eine Gleichspannung an einem Gleichspannungsausgang bereit, die mittels der Schalteinrichtung von der Primärseite auf die Sekundärseite transformiert werden kann.

Die bereitgestellte Gleichspannung kann dabei beispielsweise aus einem Zwischenkreis eines Umrichters der Windenergieanlage entstammen. Dafür kann bspw. bei einer Windenergieanlage mit einem Synchrongenerator ein Gleichrichter vorgesehen sein, der die Gleichspannung für den DC-DC-Wandler durch Gleichrichten eines vom Generator erzeugten Wechselstroms bereitstellen kann.

Die am Gleichspannungsausgang bereitgestellte Gleichspannung kann dabei als Niederspannung beschrieben werden und für einen Zwischenkreis typische Spannungswerte von < 1000V aufweisen.

Vorzugsweise umfasst die Schalteinrichtung wenigstens zwei Leistungsschalter und/oder wenigstens vier Leistungsschalter, die dazu eingerichtet sind, eine Gleichspannung in eine Spannung wechselnder Polarität an der Primärseite anzulegen.

Somit kann eine Verschaltung der Leistungsschalter als eine Halb- oder Vollbrückenschaltung, wie bspw. eine so genannte H-Brücke vorgenommen werden.

Als Leistungsschalter können beispielsweise gängige Leistungsschalter bzw. Leistungstransistoren wie IGBTs, Thyristoren, MOSFETs oder Bipolartransistoren eingesetzt werden.

Die Leistungsschalter werden dabei so angesteuert, dass bei einer ersten Schalterstellung eine positive Spannung des DC-Zwischenkreises durch einen ersten Leistungsschalter an einen ersten Anschlusspunkt der Primärwicklung angelegt wird und eine negative Spannung des DC-Zwischenkreises durch einen zweiten Leistungsschalter an einen zweiten Anschlusspunkt der Primärwicklung angelegt wird, so dass Strom in einer ersten Richtung durch die Primärwicklung fließt.

Bei einer zweiten Schalterstellung wird eine positive Spannung des DC-Zwischenkreises durch den ersten Leistungsschalter an den zweiten Anschlusspunkt der Primärwicklung angelegt und eine negative Spannung des DC-Zwischenkreises durch den zweiten Leistungsschalter an den ersten Anschlusspunkt der Primärwicklung angelegt, so dass Strom in einer zweiten Richtung durch die Primärwicklung fließt. Zwischen diesen beiden Schalterstellungen wird dann gewechselt, so dass die Stromrichtung entsprechend ständig wechselt.

Das kann auch durch vier Leistungsschalter erreicht werden. Somit ist es mit der Verwendung von wenigstens zwei bzw. vier Leistungsschaltern möglich, eine wechselnde Polarität an der Primärseite des Transformators zu generieren und einen wechselnden Strom in der Primärwicklung zu erzeugen, der zu einem wechselnden Strom in der Sekundärwicklung führt. Dadurch wird Leistung bzw. Energie von der Primärseite zur Sekundärseite des Transformators übertragen.

Vorzugsweise ist der Transformator des DC-DC-Wandlers als ein Hochfrequenztransformator ausgeführt. Durch das Schalten entstehen mitunter hohe Frequenzanteile, die somit übertragen werden können. Diese hohen Frequenzanteile können besonders durch große Schaltfrequenzen und/oder steile Schaltflanken entstehen. Durch die Verwendung eines Hochfrequenztransformators wird eine Übertragung mit wenigen Verlusten erreicht. Typische große Schaltfrequenzen, ab denen sich ein Einsatz eines Hochfrequenztransformators aufgrund der Kosteneffizienz erst lohnt, liegen im Bereich von 20kHz - 200kHz. Es wird gemäß einer Ausführungsform vorgeschlagen, dass ein Hochfrequenztransformator mit Schaltfrequenzen aus diesem Bereich verwendet wird.

Durch die Verwendung eines Hochfrequenztransformators ist es somit möglich, insbesondere die Spannung sehr verlustarm mit einem hohen Wirkungsgrad zu übertragen. Zudem ermöglicht die Verwendung eines Hochfrequenztransformators die Verwendung von Leistungsschaltern, die eine besonders hohe Schaltgeschwindigkeit bzw. steile Schaltflanken aufweisen. Beispielsweise weisen moderne Leistungstransistoren wie IGBTs oder SiC-MOSFETs große bzw. steile Schaltflanken von mehreren kV/µs auf.

Ferner können mit einem Hochfrequenztransformator im Vergleich zu konventionellen Transformatoren wesentlich höhere Schaltfrequenzen der Leistungsschalter in der Schalteinrichtung realisiert werden. Insgesamt verbessert sich mit der Verwendung eines Hochfrequenztransformators der Wirkungsgrad beim Übertragen der Gleichspannung.

Vorzugsweise ist der Transformator des DC-DC-Wandlers als ein Aufwärtstransformator ausgeführt, um die niedrigere Spannung an der Primärseite in eine höhere Spannung an der Sekundärseite zu transformieren.

Erfindungsgemäß ist die Spannung auf der Primärseite niedriger als die Spannung auf der Sekundärseite bzw. der Parknetzspannung. Die Parknetzspannung entspricht dabei lediglich der gerichteten Spannung an der Sekundärseite des Transformators.

Somit ist es möglich, die durch die Windenergieanlage bereitgestellte Gleichspannung an einem Gleichspannungsausgang in einen größeren Spannungsbereich hoch zu transformieren. Ferner ist es möglich, die Spannung von der Primärseite zur Sekundärseite um ein vorgebbares Übersetzungsverhältnis ü zu transformieren.

Vorzugsweise ist der Transformator des DC-DC-Wandlers als eine galvanische Trennstufe ausgeführt, um eine galvanische Trennung zwischen der Windenergieanlage sowie dem DC-Parknetz vorzunehmen. Der Transformator ist also so ausgeführt, dass eine Verbindung von der Primärseite zur Sekundärseite und umgekehrt ausschließlich über eine elektromagnetische Kopplung besteht. Es besteht keine galvanische Verbindung.

Einen galvanisch getrennten Transformator als eine Schutztrennung zu verwenden erhöht die Sicherheit beim Betreiben einer Windenergieanlage in dem DC-Parknetz. Besonders kann eine Gefährdung der Windenergieanlage durch eine Überspannung im DC-Parknetz vermieden werden.

Durch die galvanische Trennung können keine Kurzschlussströme in den Niederspannungskreis einkoppeln und somit verhindert werden, dass die gesamte im Parknetz vorhandene Energie nicht über den Transformator entladen werden kann. Ferner wird auch durch die passive Ausführung des Transformators die Zuverlässigkeit des Parknetzes erhöht.

Vorzugsweise ist der Transformator des DC-DC-Wandlers als Hochspannungstransformator ausgeführt, um eine sichere galvanische Trennung zwischen der Windenergieanlage sowie dem DC-Parknetz auch für hohe Spannungen zu erreichen. Auch hier kann ein Übertragungsverhältnis ü zwischen der Primär- und der Sekundärseite des Hochspannungstransformators im Wesentlichen frei wählbar sein.

Als Übertragungsverhältnis ü für den Transformator, das gilt grundsätzlich für jeden vorstehend oder nachfolgend beschriebenen Transformator, wird ein Wert von wenigstens 5, vorzugsweise wenigstens 20, insbesondere wenigstens 50 vorgeschlagen. Die bevorzugte DC-Parknetzspannung in einem Normalbetrieb liegt dabei bei wenigstens 6kV, vorzugsweise wenigstens 14kV, insbesondere wenigstens 20kV.

Ganz generell wird das Übertragungsverhältnis ü eines Transformators über das Verhältnis U_{sekundär} / U_{primär}= n_{sekundär} / n_{primär} beschrieben, wobei U_{primär} und U_{sekundär} die Spannungen sowie n_{sekundär} und n_{primär} die jeweiligen Wicklungsanzahl der Primärseite und Sekundärseite beschreiben.

Somit ist es möglich, den Transformator bei einem großen Spannungsunterschied zwischen der Primärseite und der Sekundärseite in einem Hochspannungs-DC-Netz betreiben zu können und das Spannungsverhältnis beliebig einstellen zu können.

Vorzugsweise weist das DC-Parknetz eine Spannung zum Übertragen großer Leistung auf, die größer als 6kV ist.

Eine Parknetzspannung die größer als 6kV ist, ermöglicht somit einen ausreichend großen Leistungsfluss, um die von den Windenergieanlagen erzeugten Leistungen in das elektrische Versorgungsnetz einzuspeisen. Dabei ermöglicht eine Spannung, die größer als 14 kV ist, einen Betrieb des netzseitigen Wechselrichters ohne einen Transformator durchzuführen, da die Zwischenkreisspannung ausreichend groß ist.

Vorzugsweise weist die Sekundärseite wenigstens zwei Gleichrichtmittel auf, wobei die Gleichrichtmittel dazu eingerichtet sind, die transformierte Spannung von der Primärseite zur Sekundärseite in die Gleichspannung des DC-Parknetzes mittels einer Zweiweg-Gleichrichtung zu richten.

Als Zweiweg-Gleichrichtung wird dabei ganz generell eine Gleichrichtanordnung, besonders Diodenanordnung mit mindestens zwei Gleichrichtmitteln bzw. Dioden verstanden, die dazu verwendet werden sowohl positive als auch negative Spannungen zu richten. Dabei können sowohl negative wie auch positive Anteile einer elektrischen Spannung in eine unipolare Gleichspannung gerichtet werden. Andere Fachbegriffe für die Zweiweggleichung sind auch Doppelweggleichrichtung oder Vollwellengleichrichtung.

Erfindungsgemäß kann somit die Spannung mit wechselnder Polarität, die über den Transformator übertragen wird in eine DC-Parknetzspannung gerichtet werden.

Vorzugsweise ist die Zweiweg-Gleichrichtung als Mittelpunkt-Zweiweg-Gleichrichterschaltung und/oder als Brücken-Gleichrichterschaltung ausgeführt.

Vorzugsweise ist das Gleichrichtmittel als Hochspannungsdiode ausgeführt.

Somit ist es erfindungsgemäß möglich, die gewandelte Spannung auf der Sekundärseite in hohen Spannungsklassen zu richten.

Vorzugsweise weist der Transformator eine Mittelanzapfung auf, um eine Mittelpunkt-Zweiweg-Gleichrichtung vorzunehmen.

Der Vorteil an einer Mittelanzapfung ist, dass durch den konstruktiven Aufbau der Schaltung nur die halbe übertragene Spannung zum Mittelpunktanschlusspunkt abfällt und im Vergleich zu einem Vollbrückenumrichter mit vier Dioden lediglich zwei Dioden benötigt werden.

Es wurde auch erkannt, dass beim Betreiben eines Windparks Fehler an unterschiedlichen Stellen auftreten können, wie beispielsweise in der Windenergieanlage, im Parknetz oder anderen Komponenten, die zum Gesamtsystem des Windparks zählen. Da die Fehler ganz generell nicht voraussehbar sind, wird hier vorgeschlagen, für einen sicheren Betrieb ein mehrstufiges Schutzkonzept im Aufbau eines Parknetzes vorzusehen, das ermöglicht, dass die Windenergieanlagen und das Parknetz voneinander getrennt und spannungsfrei geschaltet werden können. Ebenso sollte gewährleistet sein, dass das Parknetz vom Versorgungsnetz getrennt und spannungsfrei geschaltet werden kann.

Gemäß einer Ausführungsform wird vorgeschlagen, dass der Wechselrichter parknetzseitig eine Entladungs- oder Erdungsvorrichtung zum Erreichen eines spannungsfreien Zustands im gesamten DC-Parknetz und/oder in einem Teilbereich des DC-Parknetzes aufweist, wobei die Entladungs- oder Erdungsvorrichtung vorzugsweise einen Chopper und/oder einen Entladungswiderstand aufweist. Besonders bei einem DC-Parknetz kann nach einem Abschalten weiterhin elektrische Spannung im DC-Parknetz vorhanden sein, zumindest eine Restspannung, weil bspw. in dem DC-Parknetz vorhandene Kondensatoren noch eine Restspannung führen. Um eine solche Spannung bzw. Restspannung abzubauen, wird die Entladungs- oder Erdungsvorrichtung vorgeschlagen. Bspw. kann die Restspannung mittels des Choppers gepulst in die Erde abgeführt werden. Es kommt auch ein elektrisches Verbinden der beiden Spannungspotentiale des DC-Parknetzes über einen Entladungswiderstand in Betracht. Der Entladungswiderstand kann auch zum Ableiten der Spannung in die Erde verwendet werden. Der Entladungswiderstand kann auch zusammen mit dem Chopper verwendet werden, indem der Chopper die Spannung gepulst über den Entladungswiderstand abführt.

Der Erfindung liegt auch der Gedanke zu Grunde, dass geeignete Schutzmaßnahmen ganz generell entweder Schutzschalter sind, die im DC-Parknetz eingebracht werden oder eine geeignete Netzarchitektur, die eine selektive Netzabschaltung gewährleisten kann. Nachteilig an Schutzschaltern für hohe Gleichspannungsklassen ist der große Kostenfaktor. Daher wird die Auswahl einer geeigneten DC-Parknetzarchitektur vorgeschlagen, um einen zuverlässigen Netzschutz realisieren zu können.

Besonders kann ein geeigneter Schutz mithilfe einer Entkopplung zwischen der Windenergieanlage und dem Parknetz mittels einer galvanischen Trennung in Form eines Transformators und geeigneten DC-DC-Wandlung vorgenommen werden. Dieser Aufbau ermöglicht eine niederspannungsseitige Abkopplung der Windenergieanlage vom Parknetz.

Ferner wird vorgeschlagen, dass die Schaltmittel und die Trennschalter im Parknetz derartig genutzt werden, dass sie eine automatische Wiedereinschaltung bzw. Kurzunterbrechung oder eine schnelle Freischaltung des Fehlers in Abhängigkeit des Fehlerorts ermöglichen. Somit sind Kurzunterbrechungen und schnelle Freischaltungen des Fehlers mittels der Trennschalter im Parknetz weitere mögliche Schutzmaßnahmen, um auf Fehler im Hochspannungskreis des Parknetzes reagieren zu können, ohne den gesamten Windpark abschalten zu müssen.

Ferner wird darauf hingewiesen, dass die Begriffe Kurzunterbrechung - auch bekannt als Automatische Wiedereinschaltung - sowie Freischaltung bekannte Fachbegriffe aus dem Bereich Netzschutz und elektrischen Energietechnik sind.

Eine weitere Ausgestaltung sieht vor, dass wenigstens ein elektrischer Verbraucher und/oder ein Energiespeicher im Parknetz angeordnet ist, um bei einer Trennung des Versorgungsnetzes und dem Parknetz Leistung innerhalb des Parknetzes elektrisch verbrauchen zu können. Muss aufgrund eines Fehlers im Versorgungsnetz oder aufgrund einer Vorgabe durch den Netzbetreiber der Windpark vom elektrischen Versorgungsnetz getrennt werden, ist es somit weiterhin möglich, Leistung zu verbrauchen oder die Leistung in einen dafür vorgesehenen Energiespeicher einzuspeisen. Dies kann vorteilhaft sein, wenn ein Fehler nur kurz vorliegt und die Windenergieanlagen nicht aufgrund fehlender Lasten sofort abgeschaltet werden müssen.

Es kann auch von Nachteil sein, wenn kein mehrstufiges Schutzkonzept bzw. kein selektiver Netzschutz vorhanden ist. Eine aktive Trennung der Windenergieanlage mittels einer geeigneten Schalteinrichtung oder eine Kurzunterbrechung mittels Trennschalter im Parknetz wird besonders auch nicht in der Offenlegungsschrift US 2011/0198847 A1 offenbart. Die darin gezeigte Technik dürfte außerdem eine besonders hohe Streuinduktivität aufgrund des ungeeigneten Transformators haben, die einen schlechten Wirkungsgrad bei der Leistungsübertragung zur Folge hat. Entsprechend wird nun erfindungsgemäß eine geeignetere Lösung vorgeschlagen.

Erfindungsgemäß wird auch ein Verfahren zum Steuern eines Windparks zum Einspeisen elektrischer Leistung in ein elektrisches Versorgungsnetz an einem Netzanschlusspunkt gemäß Anspruch 12 vorgeschlagen.

Vorzugsweise arbeitet dieses Verfahren so, wie im Zusammenhang mit einem vorstehend oder nachfolgend beschriebenen Windpark erläutert wurde. Vorzugsweise verwendet das Verfahren einen solchen Windpark.

Die vorliegende Erfindung wird nun nachfolgend exemplarisch anhand von Ausführungsbeispielen unter Bezugnahme auf die begleitenden Figuren näher erläutert.
- Fig. 1: zeigt eine schematische Ansicht einer Windenergieanlage gemäß einer Ausführungsform.
- Fig. 2: zeigt eine schematische Ansicht eines Windparks gemäß einer Ausführungsform.
- Fig. 3: zeigt schematisch einen Aufbau eines Windparks mit DC-Parknetz gemäß einer weiteren Ausführungsform.
- Fig. 4: zeigt schematisch einen Aufbau eines erfindungsgemäßen Windparks mit DC-Parknetz gemäß einer weiteren Ausführungsform, wobei ein selektiver Netzschutz implementiert ist.

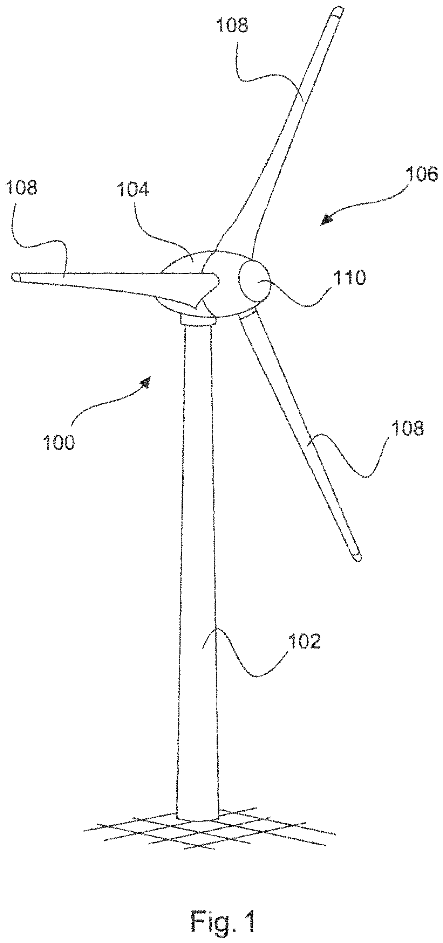

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

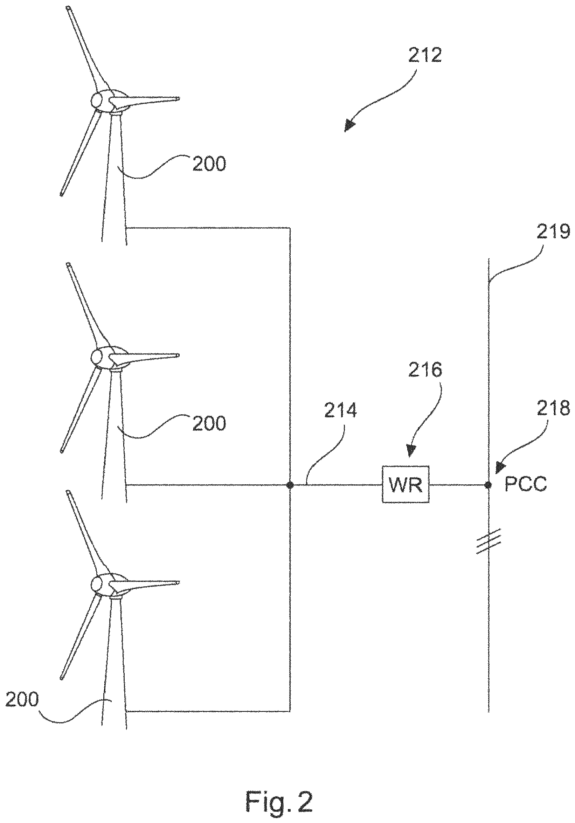

Figur 2 zeigt einen Windpark 212 mit beispielhaft drei Windenergieanlagen 200, die gleich oder verschieden sein können. Die drei Windenergieanlagen 200 stehen somit repräsentativ für im Grunde eine beliebige Anzahl von Windenergieanlagen eines Windparks 212. Die Windenergieanlagen 200 stellen ihre Leistung, nämlich insbesondere den erzeugten Strom über ein elektrisches DC-Parknetz 214 bereit. Dabei werden die jeweils erzeugten Ströme bzw. Leistungen der einzelnen Windenergieanlagen 200 aufaddiert und es ist hier ein Zentralwechselrichter 216 vorgesehen, der die DC-Spannung im Park in eine Wechselspannung umrichtet, um dann entsprechenden Strom an dem Einspeisepunkt 218, der auch allgemein als PCC bezeichnet wird, in das Versorgungsnetz 219 einzuspeisen. Fig. 2 ist nur eine vereinfachte Darstellung eines Windparks 212, die beispielsweise keine Steuerung zeigt, obwohl natürlich eine Steuerung vorhanden ist.

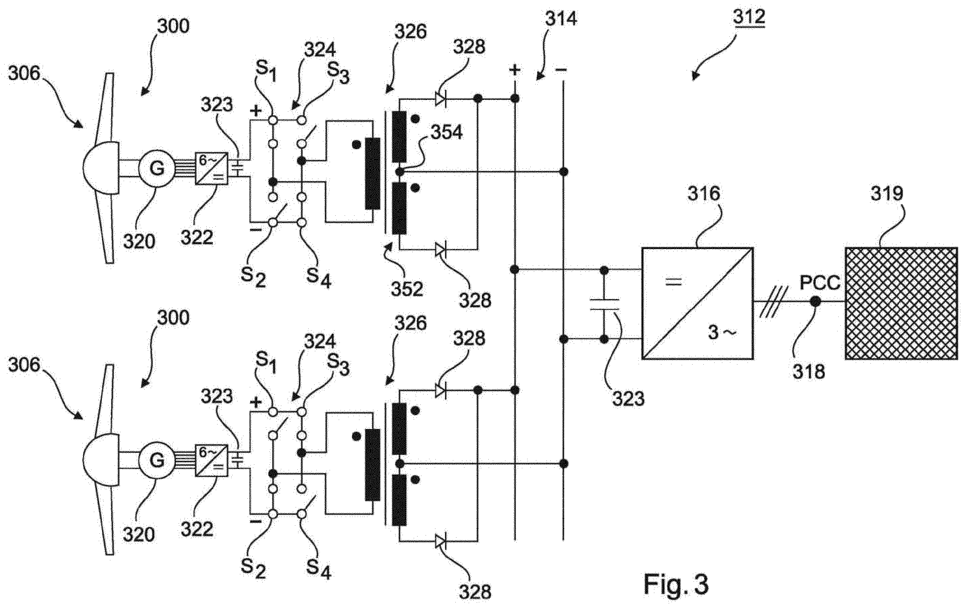

Figur 3 zeigt eine detaillierte Ausführungsform eines Windparks 312. Jede Windenergieanlage 300 wandelt mechanische Energie mit einem drehbaren Rotor 306 mittels eines Generators 320 in elektrische Leistung um. Der Generator 320 erzeugt dabei eine 6-phasige Wechselspannung die mit einem Gleichrichter 322 in eine Gleichspannung gleichgerichtet wird. Der Gleichrichter 322 kann dabei auch gleichspannungsseitig einen Kondensator 323 als Energiespeicher aufweisen. Der Gleichrichter 322 ist dabei elektrisch mit der Schalteinrichtung 324 verbunden, sodass die gleichgerichtete Gleichspannung des Gleichrichters der Schalteinrichtung 324 bereitgestellt werden kann.

Die Schalteinrichtung 324 weist dabei insgesamt vier Leistungsschalter S1, S2, S3 und S4 auf, wobei die vier Leistungsschalter in einer Vollbrückenschaltung angeordnet werden, die auch als Brückenschaltung oder H-Brücke bezeichnet werden kann. Die in Serie geschalteten Schalter S1 und S2 bilden dabei einen ersten und die ebenfalls in Serie geschalteten Schalter S3 und S4 bilden einen zweiten Brückenzweig aus. Ferner wird eine Primärseite 350 des Transformators 326 an die beiden Brückenzweige der Schalteinrichtung 324 elektrisch angeschlossen, nämlich zwischen die Schalter S1 und S2 mit einem ersten Anschluss sowie zwischen die Schalter S3 und S4.

Durch ein diagonales Einschalten der Schalter S1 und S4, wobei die Schalter S2 und S3 geöffnet sind, kann eine positive Spannung an der Primärseite 350 des Transformators 326 erzeugt werden. Umgekehrt kann ebenfalls eine Spannung mit negativen Vorzeichen an der Primärseite 350 des Transformators 326 angelegt werden, wenn die Schalter S2 und S3 in einem leitenden und die Schalter S1 und S4 in einem nicht-leitenden Zustand sind.

Entsprechend der Polarität der Spannung wechselt auch das Vorzeichen des Stromflusses durch die Primärseite 350 des Transformators 326. Somit generiert die Schalteinrichtung 324 eine Spannung mit wechselnder Polarität an der Primärseite 350 des Transformators 326.

Die Spannung mit wechselnder Polarität wird zur Sekundärseite 352 des Transformators 326 mit dem Übersetzungsverhältnis ü transformiert. Dabei weißt der Transformator 326 eine Zweiteilung mit Mittelanzapfung 354 auf. Die Mittelanzapfung 354 erlaubt eine ZweiWeg-Gleichrichtung über die Gleichrichtmittel 328. Dabei ist die Mittelanzapfung 354 elektrisch mit einer ersten Hauptanschlussleitung des Parknetzes 314 und die Gleichrichtmittel 328 über einen gemeinsamen Anschlusspunkt mit der zweiten elektrischen Hauptanschlussleitung verbunden.

Demnach wird die transformierte Gleichspannung an der Sekundärseite 352 des Transformators 326 durch die Gleichrichtmittel 328 erfindungsgemäß in die Parknetzspannung gerichtet. An die zwei Hauptanschlussleitungen des Parknetzes 314 ist ein Zentralwechselrichter 316 elektrisch angeschlossen. Der Zentralwechselrichter 316 - der ebenfalls einen Kondensator 323 als Speicher aufweisen kann - speist daraufhin die erzeugte Leistung aus dem Parknetz an dem Netzanschlusspunkt 318 in das elektrische dreiphasige Versorgungsnetz 319 ein.

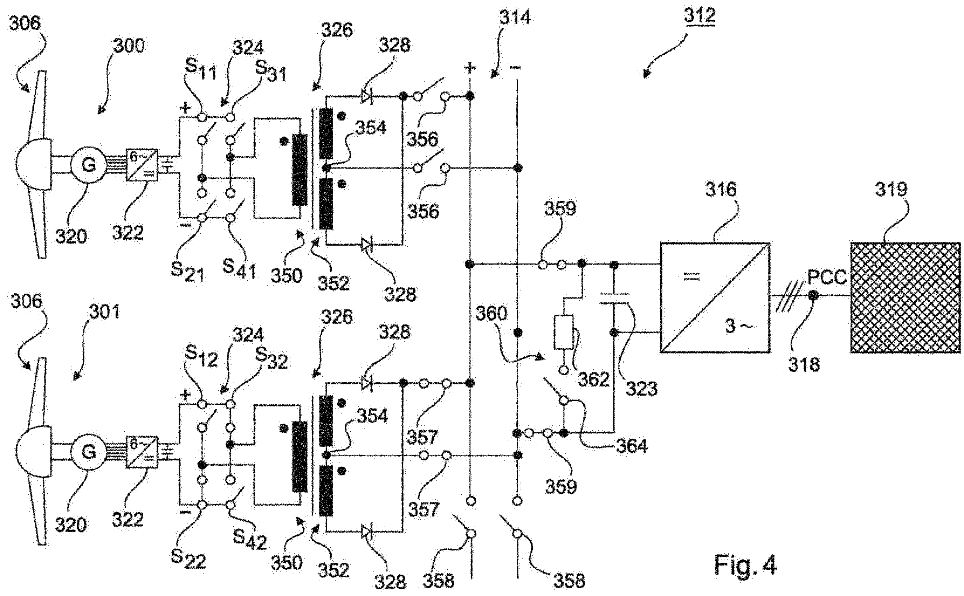

Figur 4 zeigt eine weitere detaillierte Ausführungsform des erfindungsgemäßen Windparks 312 und verdeutlicht ein mehrstufiges und selektives Netzschutzkonzept gemäß einer Ausführungsform. Der besseren Übersichtlichkeit halber sind ähnliche, aber nicht unbedingt identische Elemente in den Figuren 3 und 4 mit gleichen Bezugszeichen versehen. In der gezeigten Ausführungsform sind die Schalter S11, S21, S31 und S41 der Schalteinrichtung 324 geöffnet. Mit geöffneter Schalterstellung ist die Primärseite 350 des Transformators 326 elektrisch von der Windenergieanlage entkoppelt und somit freigeschaltet.

Ebenso kann die Sekundärseite 352 für jede Windenergieanlage über die Trennschalter 356, 357 vom Parknetz 314 elektrisch, insbesondere galvanisch getrennt werden. In der gezeigten Ausführungsform in Figur 4 ist als Beispiel gezeigt, wie die Windenergieanlage 300 elektrisch vom Parknetz 314 getrennt ist und die Trennschalter 356 geöffnet sind, wobei die Windenergieanlage 301 noch mit dem Parknetz über die Trennschalter 357 verbunden ist. Somit können beispielsweise Wartungsarbeiten an der Windenergieanlage 300 durchgeführt werden und gleichzeitig die Windenergieanlage 301 noch aktiv in das Versorgungsnetz 319 einspeisen.

Ferner können die Trennschalter 356, 357, 358, 359 beliebig im Parknetz 314 angeordnet sein. Tritt beispielsweise ein Fehler in einem anderen Teilbereich - in der Figur 4 nicht mehr gezeigt - des Windparks 312 auf, kann über die gezeigten Trennschalter 358 ein anderer Teilbereich des Parknetzes abgetrennt werden.

Ebenso ist in der Figur 4 eine Erdungsvorrichtung 360 gezeigt, die auch als Entladungsvorrichtung bezeichnet werden kann, die einen Lastwiderstand 362 und ein weiteres Schaltmittel 364 aufweist. Das Schaltmittel 364 kann als Chopper arbeiten und über ein Pulsen Strom über den Lastwiderstand 362 leiten, der damit als Entladungswiderstand arbeitet, weil der exemplarisch gezeigte Zwischenkreiskondensator 323 dadurch entladen werden kann. Diese Erdungsvorrichtung 360 kann somit also beispielsweise einen Chopper aufweisen und außerdem oder alternativ einen Entladungswiderstand bzw. eine Entladungsimpedanz. Die Erdungsvorrichtung hat also die Aufgabe, das Parknetz 314 entladen zu können und kann ebenfalls genutzt werden, um den Zwischenkreiskondensator 323 des Wechselrichters 316 zu entladen. Damit ist es möglich, das Parknetz 314 spannungsfrei zu schalten, was besonders für Wartungszwecke wichtig sein kann, um Servicepersonal zu schützen.

## Patentansprüche

1. Windpark zum Einspeisen elektrischer Leistung in ein elektrisches Versorgungsnetz (319) an einem Netzanschlusspunkt (318), umfassend:
- wenigstens zwei Windenergieanlagen (300) zum Erzeugen elektrischer Leistung
- ein DC-Parknetz (314) zum Übertragen elektrischer Leistung von den Windenergieanlagen zu dem Netzanschlusspunkt, wobei wenigstens ein elektrischer Verbraucher (362) und/oder ein Energiespeicher (323) im Parknetz angeordnet ist, um bei einer Trennung des Versorgungsnetzes und dem Parknetz Leistung innerhalb des Parknetzes elektrisch verbrauchen zu können, und das Parknetz als ein Ringnetz oder Maschennetz ausgeführt ist; und
- einen zwischen dem DC-Parknetz (314) und dem Netzanschlusspunkt (318) angeordneten Wechselrichter (316), der dazu eingerichtet ist, elektrische Gleichspannung des DC-Parknetzes in eine Wechselspannung zu transformieren, um die elektrische Leistung der Windenergieanlagen in das elektrische Versorgungsnetz einzuspeisen;
- wenigstens einen DC-DC-Wandler (326) zum Einspeisen elektrischer Leistung von wenigstens einer Windenergieanlage in das DC-Parknetz, wobei
- der DC-DC-Wandler eine Schalteinrichtung und einen Transformator mit einer Primär- (350) und einer Sekundärseite (352) aufweist,
- die Primärseite über die Schalteinrichtung (324) mit derwenigstens einen Windenergieanlage gekoppelt ist,
- die Sekundärseite über wenigstens ein Gleichrichtmittel (328), insbesondere ein Gleichrichtmittel, das mehrere Dioden aufweist, mit dem DC-Parknetz gekoppelt ist und
- der DC-DC-Wandler dazu eingerichtet ist mittels der Schalteinrichtung an der Primärseite des Transformators eine Gleichspannung mit wechselnder Polarität anzulegen, um dadurch eine Gleichspannung der wenigstens einen Windenergieanlage von der Primärseite auf die Sekundärseite zu transformieren, und
- das DC-Parknetz wenigstens einen Trennschalter (358) zum Freischalten eines Fehlers in einem Teilbereich des DC-Parknetzes aufweist, wobei der Trennschalter Teilbereiche des Parknetzes verbinden oder voneinander trennt, um eine selektive DC-Parknetzabschaltung zu ermöglichen, wobei
- der wenigstens eine Trennschalter zum Durchführen einer Kurzunterbrechung bzw. einer automatischen Wiedereinschaltung und/oder zum Freischalten eines Fehlers eingerichtet ist, und wobei
- die Primärseite des Transformators überdie Schalteinrichtung galvanisch entkoppelt werden kann, wobei die elektrische Entkopplung durch Öffnen von Schaltmitteln erfolgt, die in der Schalteinrichtung angeordnet sind, um eine vollständige galvanische Entkopplung zwischen der Windenergieanlage und dem DC-Parknetz zu erreichen.

2. Windpark nach Anspruch 1, **dadurch gekennzeichnet, dass** die Windenergieanlagen der Schalteinrichtung eine Gleichspannung an einem Gleichspannungsausgang bereitstellt, die dazu vorbereitet ist mittels der Schalteinrichtung von der Primärseite auf die Sekundärseite transformiert zu werden.

3. Windpark nach Anspruch 1 oder 2, **dadurch gekennzeichnet, dass** die Schalteinrichtung zwei Leistungsschalter und/oder wenigstens vier Leistungsschalter aufweist, die dazu eingerichtet sind, eine Gleichspannung in eine Spannung wechselnder Polarität an der Primärseite anzulegen.

4. Windpark nach einem der vorstehenden Ansprüche, **dadurch gekennzeichnet, dass** der Transformator des DC-DC-Wandlers als ein Hochfrequenztransformator ausgeführt ist, um bei vorliegenden großen Schaltfrequenzen und/oder großen Schaltflanken weniger elektrische Verluste bei einer Transformation der Spannung von der Primärseite auf die Sekundärseite zu erzeugen und/oder
dass der Transformator des DC-DC-Wandlers als ein Aufwärtstransformator ausgeführt ist, um die niedrigere Spannung an der Primärseite in eine höhere Spannung an der Sekundärseite zu transformieren und/oder
dass der Transformator des DC-DC-Wandlers als eine galvanische Trennstufe ausgeführt ist, um eine galvanische Trennung zwischen der Windenergieanlage sowie dem DC-Parknetz vorzunehmen.

5. Windpark nach einem der vorstehenden Ansprüche, **dadurch gekennzeichnet, dass** der Transformator des DC-DC-Wandlers als Hochspannungstransformator ausgeführt ist, um eine galvanische Trennung zwischen der Windenergieanlage sowie dem DC-Parknetz vorzunehmen, wobei der Transformator insbesondere ein vorgegebenes Übertragungsverhältnis ü des Hochspannungstransformators aufweist und/oder
dass das DC-Parknetz eine Spannung zum Übertragen großer Leistungen aufweist die größer als 6kV ist, insbesondere größer als 14kV ist.

6. Windpark nach einem der vorstehenden Ansprüche, **dadurch gekennzeichnet, dass** die Sekundärseite wenigstens zwei Gleichrichtmittel aufweist, wobei die Gleichrichtmittel dazu eingerichtet sind, die transformierte Spannung von der Primärseite zur Sekundärseite in die Gleichspannung des DC-Parknetzes mittels einer Zweiweggleichrichtung zu richten und dass optional die Zweiweggleichrichtung als Mittelpunkt-Zweiweg-Gleichrichterschaltung und/oder als Brücken-Gleichrichterschaltung ausgeführt ist, und/oder dass
die Gleichrichtmittel als Hochspannungsdioden ausgeführt sind.

7. Windpark nach einem der vorherstehenden Ansprüche, **dadurch gekennzeichnet, dass** der Transformator eine Mittelanzapfung aufweist, um eine Mittelpunkt-Zweiweg-Gleichrichtung vorzunehmen.

8. Windpark nach einem der vorstehenden Ansprüche, **dadurch gekennzeichnet, dass** die transformierte Gleichspannung von der Primärseite auf die Sekundärseite einen nahezu rechteckigen Verlauf aufweist.

9. Windpark nach einem der vorstehenden Ansprüche, **dadurch gekennzeichnet, dass** der Wechselrichter parknetzseitig eine Entladungs- oder Erdungsvorrichtung zum Erreichen eines spannungsfreien Zustands im gesamten DC-Parknetz und/oder in einem Teilbereich des DC-Parknetzes aufweist, wobei die Entladungs- oder Erdungsvorrichtung vorzugsweise einen Chopper und/oder einen Entladungswiderstand aufweist.

10. Windpark nach einem der vorstehenden Ansprüche, **dadurch gekennzeichnet, dass** der DC-Wandler als Durchflusswandler und/oder als Resonanzwandler ausgeführt ist.

11. Windpark nach einem der vorstehenden Ansprüche, **dadurch gekennzeichnet, dass** wenigstens ein Schaltmittel zum Durchführen einer Kurzunterbrechung bzw. einer automatischen Wiedereinschaltung und/oder zum Freischalten eines Fehlers verwendet werden kann.

12. Verfahren zum Steuern eines Windparks zum Einspeisen elektrischer Leistung in ein elektrisches Versorgungsnetz (319) an einem Netzanschlusspunkt (318), wobei der Windpark
- wenigstens zwei Windenergieanlagen (300) zum Erzeugen elektrischer Leistung aufweist
- ein DC-Parknetz (314) zum Übertragen elektrischer Leistung von den Windenergieanlagen zu dem Netzanschlusspunkt aufweist, wobei wenigstens ein elektrischer Verbraucher (362) und/oder ein Energiespeicher (323) im Parknetz angeordnet ist, um bei einer Trennung des Versorgungsnetzes und dem Parknetz Leistung innerhalb des Parknetzes elektrisch verbrauchen zu können, und das Parknetz als ein Ringnetz oder Maschennetz ausgeführt ist; und
- einen zwischen dem DC-Parknetz (314) und dem Netzanschlusspunkt (318) angeordneten Wechselrichter (316), wobei der Wechselrichter, elektrische Gleichspannung des DC-Parknetzes in eine Wechselspannung transformiert, um die elektrische Leistung der Windenergieanlagen in das elektrische Versorgungsnetz einzuspeisen;
- wenigstens einen DC-DC-Wandler (326) vorgesehen ist und elektrische Leistung von wenigstens einer Windenergieanlage in das DC-Parknetz einspeist, wobei
- der DC-DC-Wandler eine Schalteinrichtung und einen Transformator mit einer Primär- (350) und einer Sekundärseite (352) aufweist,
- die Primärseite über die Schalteinrichtung (324) mit derwenigstens einen Windenergieanlage gekoppelt ist,
- die Sekundärseite über wenigstens ein Gleichrichtmittel (328), insbesondere ein Gleichrichtmittel, das mehrere Dioden aufweist, mit dem DC-Parknetz gekoppelt ist und
- der DC-DC-Wandler mittels der Schalteinrichtung an der Primärseite des Transformators eine Gleichspannung mit wechselnder Polarität anlegt, wobei dadurch eine Gleichspannung der wenigstens einen Windenergieanlage von der Primärseite auf die Sekundärseite transformiert wird, und wobei
- das DC-Parknetz wenigstens einen Trennschalter (358) zum Freischalten eines Fehlers in einem Teilbereich des DC-Parknetzes aufweist, wobei der Trennschalter Teilbereiche des Parknetzes verbinden oder voneinander trennt, um eine selektive DC-Parknetzabschaltung zu ermöglichen, und wobei der wenigstens eine Trennschalter zum Durchführen einer Kurzunterbrechung bzw. einer automatischen Wiedereinschaltung und/oder zum Freischalten eines Fehlers eingerichtet ist, und wobei
- die Primärseite des Transformators über die Schalteinrichtung galvanisch entkoppelbarwerden kann, wobei die elektrische Entkopplung durch Öffnen von Schaltmitteln erfolgt, die in der Schalteinrichtung angeordnet sind, um eine vollständige galvanische Entkopplung zwischen der Windenergieanlage und dem DC-Parknetz zu erreichen.

13. Verfahren nach Anspruch 12, **dadurch gekennzeichnet, dass** das Verfahren einen Windpark gemäß einem der Ansprüche 1 bis 12 verwendet bzw. auf einem solchen Windpark ausgeführt wird.

## Claims

1. A wind park for feeding electrical power into an electrical supply network (319) at a network connection point (318), comprising:
- at least two wind turbines (300) for generating electrical power;
- a DC park network (314) for transmitting electrical power from the wind turbines to the network connection point, wherein at least one electrical load (362) and/or an energy store (323) is/are arranged in the park network in order to be able to electrically consume power inside the park network if the supply network and the park network are isolated, and the park network is in the form of a ring network or a mesh network; and
- an inverter (316) which is arranged between the DC park network (314) and the network connection point (318) and is set up to transform electrical DC voltage of the DC park network into an AC voltage in order to feed the electrical power of the wind turbines into the electrical supply network;
- at least one DC-DC converter (326) for feeding electrical power from at least one wind turbine into the DC park network, wherein
- the DC-DC converter has a switching device and a transformer with a primary side (350) and a secondary side (352),
- the primary side is coupled to the at least one wind turbine via the switching device (324),
- the secondary side is coupled to the DC park network via at least one rectifying means (328), in particular a rectifying means having a plurality of diodes, and
- the DC-DC converter is set up to apply a DC voltage of changing polarity to the primary side of the transformer by means of the switching device in order to thereby transform a DC voltage of the at least one wind turbine from the primary side to the secondary side, and
- the DC park network has at least one isolating switch (358) for isolating a fault in a section of the DC park network, wherein the isolating switch can connect and/or isolate sections of the park network in order to enable selective DC park network disconnection, wherein
- the at least one isolating switch can be used to carry out a short interruption **or** an automatic reclosing respectively and/or to isolate a fault, and wherein
- the primary side of the transformer can be galvanically decoupled via the switching device, wherein the electrical decoupling is carried out by opening switching means which are arranged in the switching device in order to achieve complete galvanic decoupling between the wind turbine and the DC park network.

2. The wind park as claimed in claim 1, **characterized in that** the wind turbines provide the switching device with a DC voltage at a DC voltage output, which DC voltage is prepared to be transformed from the primary side to the secondary side by means of the switching device.

3. The wind park as claimed in claim 1 or 2, **characterized in that** the switching device has two circuit breakers and/or at least four circuit breakers which are set up to apply a DC voltage into a voltage of changing polarity to the primary side.

4. The wind park as claimed in one of the preceding claims, **characterized in that** the transformer of the DC-DC converter is in the form of a high-frequency transformer in order to produce fewer electrical losses when transforming the voltage from the primary side to the secondary side in the case of high switching frequencies and/or large switching edges and/or
that the transformer of the DC-DC converter is in the form of a step-up transformer in order to transform the lower voltage on the primary side into a higher voltage on the secondary side and/or
that the transformer of the DC-DC converter is in the form of a galvanic isolating stage in order to carry out galvanic isolation between the wind turbine and the DC park network.

5. The wind park as claimed in one of the preceding claims, **characterized in that** the transformer of the DC-DC converter is in the form of a high-voltage transformer in order to carry out galvanic isolation between the wind turbine and the DC park network, wherein the transformer has, in particular, a predefined transmission ratio ü of the high-voltage transformer and/or
that the DC park network has a voltage for transmitting high powers which is greater than 6 kV, in particular greater than 14 kV.

6. The wind park as claimed in one of the preceding claims, **characterized in that** the secondary side has at least two rectifying means, wherein the rectifying means are set up to rectify the transformed voltage from the primary side to the secondary side into the DC voltage of the DC park network by means of full-wave rectification and that optional
the full-wave rectification is in the form of a push-pull full-wave rectifier circuit and/or a bridge rectifier circuit and/or that
the rectifying means are in the form of high-voltage diodes.

7. The wind park as claimed in one of the preceding claims, **characterized in that** the transformer has a center tap in order to carry out push-pull full-wave rectification.

8. The wind park as claimed in one of the preceding claims, **characterized in that** the transformed DC voltage from the primary side to the secondary side has a virtually square-wave profile.

9. The wind park as claimed in one of the preceding claims, **characterized in that** the inverter has, on the park network side, a discharging or grounding apparatus for achieving a zero-potential state in the entire DC park network and/or in a section of the DC park network, wherein the discharging or grounding apparatus preferably has a chopper and/or a discharge resistor.

10. The wind park as claimed in one of the preceding claims, **characterized in that** the DC converter is in the form of a forward converter and/or a resonant converter.

11. The wind park as claimed in one of the preceding claims, **characterized in that** at least one switching means can be used to carry out a short interruption or an automatic reclosing respectively and/or to isolate a fault.

12. A method for controlling a wind park for feeding electrical power into an electrical supply network (319) at a network connection point (318), wherein the wind park
- has at least two wind turbines (300) for generating electrical power;
- has a DC park network (314) for transmitting electrical power from the wind turbines to the network connection point, wherein at least one electrical load (362) and/or an energy store (323) is/are arranged in the park network in order to be able to electrically consume power inside the park network if the supply network and the park network are isolated, and the park network is in the form of a ring network or a mesh network; and
- has an inverter (316) arranged between the DC park network (314) and the network connection point (318), wherein
the inverter transforms electrical DC voltage of the DC park network into an AC voltage in order to feed the electrical power of the wind turbines into the electrical supply network;
- at least one DC-DC converter (326) is provided and feeds electrical power from at least one wind turbine into the DC park network, wherein
- the DC-DC converter has a switching device and a transformer with a primary side (350) and a secondary side (352),
- the primary side is coupled to the at least one wind turbine via the switching device (324),
- the secondary side is coupled to the DC park network via at least one rectifying means (328), in particular a rectifying means having a plurality of diodes, and
- the DC-DC converter applies a DC voltage of changing polarity to the primary side of the transformer by means of the switching device, wherein a DC voltage of the at least one wind turbine is thereby transformed from the primary side to the secondary side, and wherein
- the DC park network has at least one isolating switch (358) for isolating a fault in a section of the DC park network, wherein the isolating switch can connect and/or isolate sections of the park network in order to enable selective DC park network disconnection, and wherein
- the at least one isolating switch can be used to carry out a short interruption or an automatic reclosing respectively and/or to isolate a fault, and wherein
- the primary side of the transformer can be galvanically decoupled via the switching device, wherein the electrical decoupling is carried out by opening switching means which are arranged in the switching device in order to achieve complete galvanic decoupling between the wind turbine and the DC park network.

13. The method as claimed in claim 12, **characterized in that** the method uses a wind park as claimed in one of claims 1 to 12 or is carried out in such a wind park respectively.

## Revendications

1. Parc éolien destiné à injecter une puissance électrique dans un réseau de distribution électrique (319) sur un point de raccordement au réseau (318), comprenant :
- au moins deux éoliennes (300) destinées à générer une puissance électrique,
- un réseau de parc CC (314) destiné à transférer une puissance électrique des éoliennes au point de raccordement au réseau, dans lequel au moins un consommateur électrique (362) et/ou un accumulateur d'énergie (323) sont disposés dans le réseau de parc pour pouvoir consommer une puissance électrique à l'intérieur du réseau de parc lors d'une coupure du réseau de distribution et du réseau de parc, et le réseau de parc est réalisé en tant qu'un réseau annulaire ou un réseau maillé ; et
- un onduleur (316) disposé entre le réseau de parc CC (314) et le point de raccordement au réseau (318), qui est mis au point pour transformer la tension continue électrique du réseau de parc CC en une tension alternative pour injecter une puissance électrique des éoliennes dans le réseau de distribution électrique ;
- au moins un convertisseur CC-CC (326) destiné à injecter une puissance électrique d'au moins une éolienne dans le réseau de parc CC, dans lequel
- le convertisseur CC-CC présente un système de commutation et un transformateur avec un côté primaire (350) et un côté secondaire (352),
- le côté primaire est couplé à l'au moins une éolienne par l'intermédiaire du système de commutation (324),
- le côté secondaire est couplé au réseau de parc CC par l'intermédiaire d'au moins un moyen de redressement (328), en particulier un moyen de redressement qui présente plusieurs diodes, et
- le convertisseur CC-CC est mis au point pour appliquer une tension continue avec une polarité alternée sur le côté primaire du transformateur au moyen du système de commutation pour transformer ainsi une tension continue de l'au moins une éolienne du côté primaire au côté secondaire, et
- le réseau de parc CC présente au moins un commutateur de coupure (358) pour débloquer une anomalie dans une zone partielle du réseau de parc CC, dans lequel le commutateur de coupure relie ou coupe les unes des autres des zones partielles du réseau de parc pour permettre un débranchement sélectif de réseau de parc CC, dans lequel
- l'au moins un commutateur de coupure est mis au point pour mettre en œuvre une brève interruption ou un redémarrage automatique et/ou pour débloquer une anomalie, et dans lequel
- le côté primaire du transformateur peut être découplé de manière galvanique par l'intermédiaire du système de commutation, dans lequel le découplage électrique est effectué en ouvrant des moyens de commutation, qui sont disposés dans le système de commutation pour atteindre un découplage galvanique complet entre l'éolienne et le réseau de parc CC.

2. Parc éolien selon la revendication 1, **caractérisé en ce que** les éoliennes du système de commutation fournissent une tension continue à une sortie de tension continue, qui est préparée pour être transformée au moyen du système de commutation du côté primaire au côté secondaire.

3. Parc éolien selon la revendication 1 ou 2, **caractérisé en ce que** le système de commutation présente deux sectionneurs de puissance et/ou au moins quatre sectionneurs de puissance, qui sont mis au point pour appliquer une tension continue dans une tension à polarité alternée sur le côté primaire.

4. Parc éolien selon l'une quelconque des revendications précédentes, **caractérisé en ce que** le transformateur du convertisseur CC-CC est réalisé en tant qu'un transformateur haute fréquence pour générer, en présence de grandes fréquences de commutation et/ou de grands flancs de commutation, moins de pertes électriques lors d'une transformation de la tension du côté primaire au côté secondaire, et/ou
que le transformateur du convertisseur CC-CC est réalisé en tant qu'un transformateur élévateur de tension pour transformer la tension plus faible sur le côté primaire en une tension plus haute sur le côté secondaire, et/ou
que le transformateur du convertisseur CC-CC est réalisé en tant qu'un étage de coupure galvanique pour procéder à une coupure galvanique entre l'éolienne et le réseau de parc CC.

5. Parc éolien selon l'une quelconque des revendications précédentes, **caractérisé en ce que** le transformateur du convertisseur CC-CC est réalisé en tant que transformateur haute tension pour procéder à une coupure galvanique entre l'éolienne et le réseau de parc CC, dans lequel le transformateur présente en particulier un rapport de transfert prédéfini ü du transformateur haute tension, et/ou
**que** le réseau de parc CC présente une tension pour transférer de grandes puissances, qui est supérieure à 6 kV, en particulier est supérieure à 14 kV.

6. Parc éolien selon l'une quelconque des revendications précédentes, **caractérisé en ce que** le côté secondaire présente au moins deux moyens de redressement, dans lequel les moyens de redressement sont mis au point pour configurer la tension transformée du côté primaire au côté secondaire en la tension continue du réseau de parc CC au moyen d'un redressement double alternance, et qu'en option le redressement double alternance est réalisé en tant que circuit redresseur double alternance à point milieu et/ou en tant que circuit redresseur à pont, et/ou que
les moyens de redressement sont réalisés en tant que diodes à haute tension.

7. Parc éolien selon l'une quelconque des revendications précédentes, **caractérisé en ce que** le transformateur présente une prise médiane pour réaliser un redressement double alternance à point milieu.

8. Parc éolien selon l'une quelconque des revendications précédentes, **caractérisé en ce que** la tension continue transformée du côté primaire au côté secondaire présente un profil quasiment rectangulaire.

9. Parc éolien selon l'une quelconque des revendications précédentes, **caractérisé en ce que** l'onduleur présente côté réseau de parc un dispositif de décharge ou de mise à la terre pour atteindre un état sans tension dans l'ensemble du réseau de parc CC et/ou dans une zone partielle du réseau de parc CC, dans lequel le dispositif de décharge ou de mise à la terre présente de préférence un hacheur et/ou une résistance de décharge.

10. Parc éolien selon l'une quelconque des revendications précédentes, **caractérisé en ce que** le convertisseur CC est réalisé en tant que convertisseur direct et/ou en tant qu'un convertisseur à résonance.

11. Parc éolien selon l'une quelconque des revendications précédentes, **caractérisé en ce qu'**au moins un moyen de commutation peut être utilisé pour mettre en œuvre une brève interruption ou un redémarrage automatique et/ou pour débloquer une anomalie.

12. Procédé pour commander un parc éolien destiné à injecter une puissance électrique dans un réseau de distribution électrique (319) sur un point de raccordement au réseau (318), dans lequel le parc éolien présente
- au moins deux éoliennes (300) destinées à générer une puissance électrique ;
- un réseau de parc CC (314) destiné à transférer une puissance électrique de l'éolienne au point de raccordement au réseau, dans lequel au moins un consommateur électrique (362) et/ou un accumulateur d'énergie (323) sont disposés dans le réseau de parc pour pouvoir consommer une puissance électrique à l'intérieur du parc de réseau dans le cas d'une coupure du réseau de distribution et du réseau de parc, et le réseau de parc est réalisé en tant qu'un réseau annulaire ou un réseau maillé ; et
- un onduleur (316) disposé entre le réseau de parc CC (314) et le point de raccordement au réseau (318), dans lequel l'onduleur transforme une tension continue électrique du réseau de parc CC en une tension alternative pour injecter la puissance électrique des éoliennes dans le réseau de distribution électrique ;
- au moins un convertisseur CC-CC (326) est prévu et injecte une puissance électrique d'au moins une éolienne dans le réseau de parc CC, dans lequel
- le convertisseur CC-CC présente un système de commutation et un transformateur avec un côté primaire (350) et un côté secondaire (352),
- le côté primaire est couplé à l'au moins une éolienne par l'intermédiaire du système de commutation (324) ,
- le côté secondaire est couplé au réseau de parc CC par l'intermédiaire d'au moins un moyen de redressement (328), en particulier un moyen de redressement qui présente plusieurs diodes et
- le convertisseur CC-CC applique une tension continue à polarité alternée sur le côté primaire du transformateur au moyen du système de commutation, dans lequel ainsi une tension continue de l'au moins une éolienne est transformée du côté primaire au côté secondaire, et dans lequel
- le réseau de parc CC présente au moins un commutateur de coupure (358) pour débloquer une anomalie dans une zone partielle du réseau de parc CC, dans lequel le commutateur de coupure relie ou coupe les unes des autres des zones partielles du réseau de parc pour permettre un débranchement sélectif de réseau de parc CC, et dans lequel l'au moins un commutateur de coupure est mis au point pour mettre en œuvre une brève interruption ou un redémarrage automatique et/ou pour débloquer une anomalie, et dans lequel
- le côté primaire du transformateur peut être découplé de manière galvanique par l'intermédiaire du système de commutation, dans lequel le découplage électrique est effectué en ouvrant des moyens de commutation, qui sont disposés dans le système de commutation pour atteindre un découplage galvanique complet entre l'éolienne et le réseau de parc CC.

13. Procédé selon la revendication 12, **caractérisé en ce que** le procédé utilise un parc éolien selon l'une quelconque des revendications 1 à 12 ou est réalisé sur un parc éolien de ce type.
